# EUROPÄISCHE PATENTSCHRIFT

(11) **EP 0 719 019 B1**
(45) Veröffentlichungstag und Bekanntmachung des Hinweises auf die Patenterteilung: **14.11.2001**
(21) Anmeldenummer: 95120276.1
(22) Anmeldetag: 21.12.1995
(51) Int. Cl.: H04M 1/65, H04M 1/64, H04M 3/50

(54) **Verfahren für ein Ausgeben einer Ansage in einer von mehreren Sprachen und Vorrichtung dafür**
Method for delivering a message in one of several languages and apparatus therefor
Méthode de délivrance d'un message dans une langue parmi plusieurs et dispositif associé

(30) Priorität: 24.12.1994 DE 4446520
(43) Veröffentlichungstag der Anmeldung: 26.06.1996
(73) Patentinhaber: ALCATEL, 75008 Paris (FR)
(72) Erfinder: Kopp, Dieter, D-71282 Hemmingen (DE)
(74) Vertreter: Schätzle, Albin, Dipl.-Phys.

(56) Entgegenhaltungen:
- EP-A- 0 307 137
- EP-A- 0 455 912
- EP-A- 0 567 135
- US-A- 4 985 913
- US-A- 5 333 180
- US-A- 5 440 615

## Beschreibung

Die vorliegende Erfindung betrifft ein Verfahren für ein Ausgeben einer Ansage in einer von mehreren Sprachen nach dem Oberbegriff des Patentanspruchs 1 und eine Vorrichtung nach dem Oberbegriff des Patentanspruchs 3.

Aus US 5 333 180 A ist folgendes Sprachnachrichtensystem bekannt:

Das Sprachnachrichtensystem empfängt Anforderungen von Anrufern, Sprachnachrichten an in der Anforderung spezifizierte Teilnehmer zu liefern. Die Sprachnachrichten werden von dem Sprachnachrichtensystem aufgezeichnet und sodann von dem Sprachnachrichtensystem an den in der Anforderung spezifierten Teilnehmer geliefert. Bei der Lieferung der Sprachnachricht sendet das Sprachnachrichtensystem vor der eigentlichen Sprachnachricht eine Ansage an den Teilnehmer. Beim Empfang einer Anforderung eines Anrufers, eine internationale Sprachnachricht zu liefern, verwendet das Sprachnachrichtensystem den Ländercode der Teilnehmernummer des Teilnehmers, an den die Sprachnachricht gesendet werden soll, um die Sprache auszuwählen, die von dem Sprachnachrichtensystem für die der Lieferung der Sprachnachricht vorrausgehende Ansage verwendet wird. Ist der Ländercode nicht in einer in dem Sprachnachrichtensystem abgespeicherten Tabelle aufgeführt, so wird der Anruf von dem Sprachnachrichtensystem beendet.

Aus der europäischen Patentschrift EP 0307137 ist weiter eine Telefonanrufbeantwortungsvorrichtung zum Beantworten eines eingehenden Telefonanrufes bekannt. Bei dieser Telefonanrufbeantwortungsvorrichtung wird einem Anrufer eine erste Begrüßungsansage in einer festgelegten Standardsprache übermittelt. Anschließend erhält der Anrufer die Möglichkeit, der Telefonanrufbeantwortungsvorrichtung eine Nachricht zu übersenden. Tut er dies, dann wird die übermittelte Nachricht in der Telefonanrufbeantwortungsvorrichtung analysiert und die von dem Anrufer verwendete Sprache festgestellt. Entspricht die von dem Anrufer verwendete Sprache nicht der festgelegten Standardsprache, dann wird anschließend eine am besten geeignete Sprache von der Telefonanrufbeantwortungsvorrichtung ausgewählt und dem Anrufer eine zweite Ansage in dieser am besten geeigneten Sprache übermittelt. Es ist die Aufgabe der vorliegenden Erfindung, eine anruferfreundliche Vorrichtung oder ein anruferfreundliches Verfahren für ein Ausgeben einer Ansage in einer von mehreren Sprachen anzugeben.

Diese Aufgabe ist durch die Lehre des Patentanspruchs 1 oder des Patentanspruchs 3 gelöst.

Eine vorteilhafte Ausgestaltung der Erfindung ist dem abhängigen Anspruch zu entnehmen.

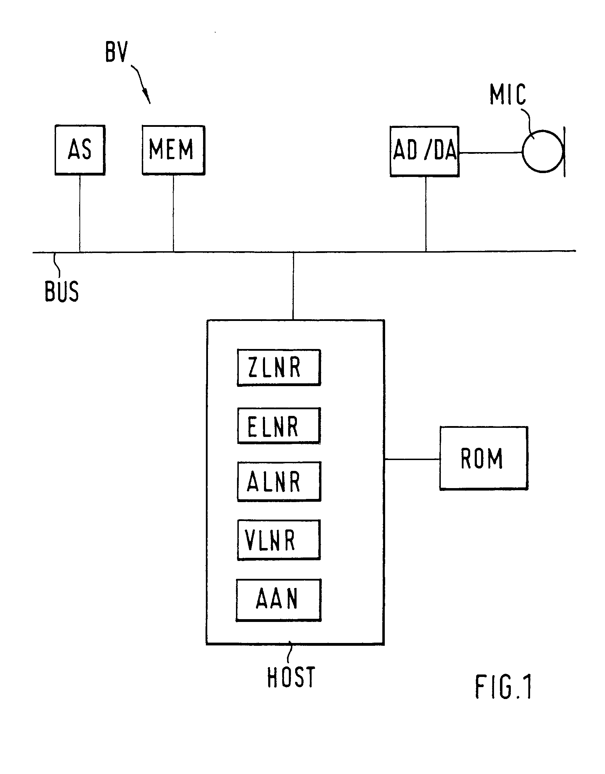

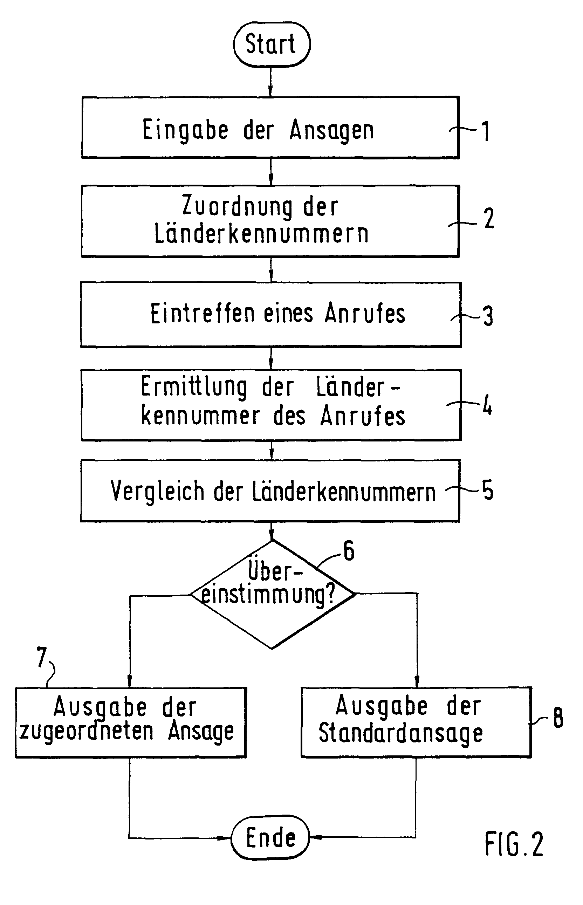

Zum besseren Verständnis der Erfindung und ihrer Vorteile sind im folgenden Ausführungsbeispiele anhand der Figuren 1 und 2 beschrieben.
Es zeigen:
- Fig. 1: ein Ausführungsbeispiel der erfindungsgemäßen Vorrichtung und
- Fig. 2: ein Ablaufdiagramm eines Ausführungsbeispiels des erfindungsgemäßen Verfahrens.

Figur 1 zeigt das Ausführungsbeispiel einer erfindungsgemäßen Vorrichtung BV zum Ausgeben einer Ansage in einer von mehreren Sprachen. Diese erfindungsgemäße Vorrichtung BV ist im vorliegenden Ausführungsbeispiel ein Anrufbeantworter. Sie kann aber ebenso ein andersgeartetes Sprachinformationssystem sein. Der Anrufbeantworter BV hat ein Anschlußmittel AS für ein Kommunikationsnetz. Des weiteren hat der Anrufbeantworter BV eine analoge Schnittstelle mit einem Analog-Digital/Digital-Analog Wandler AD/DA, über den ein Mikrophon MIC zur analogen Spracheingabe angeschlossen ist. Ein erster Speicher MEM wird zur Aufzeichnung und Wiedergabe von digitalisierter Sprache verwendet. Der erste Speicher MEM wird insbesondere für die Abspeicherung einer Ansage in verschiedenen Sprachen benutzt. Diese Ansagen können auch in komprimierter Form im ersten Speicher MEM abgespeichert werden. Der erste Speicher MEM kann beispielsweise ein handelsübliches DRAM sein, oder aber ein elektrisch löschbarer, programmierbarer Festwertspeicher, ein sogenanntes EEPROM (Electrically Erasible and Programmable Read-Only Memory), wobei auch die blockweise löschbaren Flash-EPROM's gemeint sind. Der Anrufbeantworter BV besitzt ein erstes Steuermittel HOST zur Steuerung von mit dem Anrufbeantworter BV durchführbaren Funktionen. Das erste Steuermittel HOST hat eine direkte Verbindung zu einem zweiten Speicher ROM zur Speicherung von Programmodulen. Diese Programmodule enthalten die Anweisungen für das erste Steuermittel HOST zur Steuerung der Funktionen, die mit dem Anrufbeantworter BV ausgeführt werden können. Die beschriebenen Komponenten des Anrufbeantworters BV sind zum Austausch von Daten an einen internen Bus BUS angeschlossen. Die Komponenten des Anrufbeantworters BV können allerdings auch auf andere Weise miteinander verbunden sein. In dem ersten Steuermittel HOST ist ein Zuordnungsmittel ZLNR, ein Empfangsmittel ELNR, ein Auswertemittel ALNR, ein Vergleichsmittel VLNR und ein Ausgabemittel AAN integriert. Diese benutzen die in dem zweiten Speicher ROM abgespeicherten Programmodule und führen aufgrund der darin enthaltenen Anweisungen die im folgenden beschriebenen Funktionen aus.

Das Zuordnungsmittel ZLNR ordnet den in dem ersten Speicher MEM abgespeicherten Ansagen jeweils ein oder mehrere Länderkennummern zu. Jeder dieser Länderkennummern ist wiederum ein bestimmtes Land zugeordnet. Die zugeordneten Länderkennummern können dabei zusammen mit den Ansagen in den verschiedenen Sprachen im ersten Speicher. MEM abgespeichert sein. Sie können aber auch in den Programmodulen des zweiten Speichers ROM abgespeichert sein. Das Vergleichsmittel VLNR greift bei der Durchführung seiner Funktion auf den jeweiligen Speicher MEM oder ROM zu, um die zugeordneten Länderkennummern auszulesen. Das Empfangsmittel ELNR empfängt aus dem Kommunikationsnetz signalisierte Teilnehmernummern von Anrufen, die den Anrufbeantworter BV erreichen. Das Auswertemittel ALNR wertet diese empfangene Teilnehmernummer aus und ermittelt die Länderkennummer des Landes, aus dem der Anruf stammt. Das Vergleichsmittel VLNR vergleicht die ermittelte Länderkennummer des Landes, aus dem der Anruf stammt, mit den von dem Zuordnungsmittel ZLNR den abgespeicherten Ansagen zugeordneten Länderkennummern. Das Ausgabemittel AAN veranlaßt die Ausgabe der in dem ersten Speicher MEM abgespeicherte Ansage in derjenigen Sprache in das Kommunikationsnetz, der die Länderkennummer zugewiesen ist, die mit der ermittelten Länderkennummer des Landes übereinstimmt, aus dem der Anruf stammt. Wurde durch das Vergleichsmittel VLNR keine Übereinstimmung von Länderkennummern festgestellt, dann gibt das Ausgabemittel AAN eine dafür vorgesehene Standardansage in das Kommunikationsnetz aus. Diese Standardansage wird durch das Zuordnungsmittel ZLNR festgelegt.

Figur 2 beschreibt das Ablaufdiagramm des Ausführungsbeispiels des erfindungsgemäßen Verfahrens für das Ausgeben einer Ansage in einer von mehreren Sprachen. In einem Schritt 1 erfolgt die Eingabe der Ansagen in verschiedenen Sprachen. Dazu gibt beispielsweise der Benutzer des Anrufbeantworters (BV) eine erste Ansage in Deutsch über das Mikrophon MIC zur Abspeicherung in dem ersten Speicher MEM ein. Danach gibt er eine zweite Ansage in Englisch, eine dritte Ansage in Französisch und eine vierte Ansage in Spanisch ein. Die eingegebenen Sprachen sollten vorteilhafterweise Sprachen sein, die der Benutzer selbst beherrscht. Um den benötigten Speicherplatz zu reduzieren, werden die Ansagen in den verschiedenen Sprachen vorteilhafterweise komprimiert abgespeichert. Der zweite Speicher ROM besitzt ein zur Kompression verwendbares Programmodul. Die Kompression wird durch das erste Steuermittel HOST durchgeführt. In einem Schritt 2 werden den in dem Schritt 1 angegebenen Ansagen Länderkennummern zugeordnet. In dem vorliegenden Ausführungsbeispiel wird der ersten Ansage in deutscher Sprache die Länderkennummer 49 für Deutschland und 43 für Österreich zugeordnet. Der zweiten Ansage in Englisch wird die Länderkennummer 1 für USA und Kanada und 44 für Großbritannien zugeordnet. Der dritten Ansage in Französisch wird die Länderkennummer 33 für Frankreich, die Länderkennummer 32 für Belgien und die Ländernummer 352 für Luxemburg zugeordnet. Der vierten Ansage in Spanisch wird die Länderkennummer 34 für Spanien, die Länderkennummer 52 für Mexiko und die Länderkennummer 54 für Argentinien zugeordnet. Allen anderen nicht näher spezifizierten Länderkennummern wird im vorliegenden Ausführungsbeispiel die zweite Ansage in Englisch als Standardansage zugeordnet. In einem Schritt 3 trifft ein Anruf aus dem Kommunikationsnetz beim Anrufbeantworter BV ein. In einem anschließenden Schritt 4 empfängt das Empfangsmittel ELNR die aus dem Kommunikationsnetz signalisierte Teilnehmernummer des Anrufes. Die empfangene Teilnehmernummer wird durch das Auswertemittel ALNR ausgewertet und die Länderkennummer des Landes, aus dem der Anruf stammt, ermittelt. Im vorliegenden Ausführungsbeispiel stammt der Anruf aus Spanien, so daß das Auswertemittel ELNR die Länderkennummer 34 für Spanien ermittelt. In einem Schritt 5 vergleicht anschließend das Vergleichsmittel VLNR die in dem Schritt 4 ermittelte Länderkennummer 34 mit den in dem Schritt 2 den abgespeicherten Ansagen zugeordneten Länderkennummern. Stellt das Vergleichsmittel VLNR in einem Schritt 6 eine Übereinstimmung fest, was im vorliegenden Ausführungsbeispiel bei der vierten Ansage in Spanisch der Fall ist, dann veranlaßt in einem Schritt 7 das Ausgabemittel AAN die Ausgabe der Ansage, der die ermittelte Länderkennummer zugeordnet ist. Dies ist im vorliegenden Ausführungsbeispiel die vierte Ansage in Spanisch. Diese wird daher über das Kommunikationsnetz dem Anrufer in Spanien übermittelt. Stellt das Vergleichsmittel VLNR in dem Schritt 6 keine Übereinstimmung fest, dann folgt ein Schritt 8, in dem die festgelegte Standardsprache, im vorliegenden Ausführungsbeispiel die zweite Ansage in Englisch, in das Kommunikationsnetz ausgegeben wird.

Die in den Ausführungsbeispielen beschriebene Auswahl der in das Kommunikationsnetz auszugebenden Ansage in einer der Sprachen kann auch auf andere Weise vorgenommen werden. Beispielsweise kann der ermittelten Länderkennummer des Landes, aus dem der Anruf stammt, eine Speicheradresse des ersten Speichers MEM zugewiesen sein, unter der dann die Ansage in derjenigen Sprache abgespeichert ist, die diesem Land zugeordnet ist.

## Patentansprüche

1. Verfahren für ein Ausgeben einer Ansage in einer von mehreren Sprachen für eine Vorrichtung mit einem Anschluß an ein Kommunikationsnetz, wobei bei dem Verfahren eine Ansage in verschiedenen Sprachen abgespeichert wird (1), der Ansage in jeder abgespeicherten Sprache eine Länderkennummer zugeordnet wird (2), und die Ansage in einer der verschiedenen Sprachen nach einem Empfang eines Anrufes ausgegeben wird (7, 8),
**dadurch gekennzeichnet, daß** beim Empfang eines Anrufs von einem Anrufer durch Auswertung einer aus dem Kommunikationsnetz signalisierten Teilnehmernummer eine Länderkennummer ermittelt wird, aus der ersichtlich ist, aus welchem Land der Anruf stammt (4), daß beim Empfang eines Anrufs mit einer Länderkennummer, zu der eine Ansage abgespeichert ist, die Ansage in der der Länderkennummer zugeordneten Sprache in das Kommunikationsnetz ausgegeben wird und über das Kommunikationsnetz an den Anrufer übermittelt wird (7), und daß beim Empfang eines Anrufs mit einer Länderkennummer, zu der keine Ansage abgespeichert ist, die Ansage in einer fest vorgegebenen Sprache in das Kommunikationsnetz ausgegeben wird und über das Kommunikationsnetz an den Anrufer übermittelt wird (8).

2. Verfahren nach Anspruch 1, **dadurch gekennzeichnet, daß** die Ansagen in verschiedenen Sprachen in komprimierter Form abgespeichert werden.

3. Vorrichtung (BV) zum Ausgeben einer Ansage in einer von mehreren Sprachen mit einem Anschlußmittel (AS) für ein Kommunikationsnetz, mit einem Steuermittel (HOST) zur Steuerung der mit der Vorrichtung (BV) durchführbaren Funktionen, mit einem Speicher (MEM) zum Abspeichern einer Ansage in verschiedenen Sprachen, mit einem Zuordnungsmittel (ZLNR), das so ausgestaltet ist, daß es der Ansage für jede abgespeicherte Sprache ein oder mehrere Länderkennummern zuordnet, und mit einem Empfangsmittel (ELNR) zum Empfangen von aus dem Kommunikationsnetz signalisierten Teilnehmernummern von Anrufen, die aus dem Kommunikationsnetz bei der Vorrichtung eintreffen,
**dadurch gekennzeichnet, daß** die Vorrichtung (BV)miteinem Auswertemittel (ALNR) versehen ist, das so ausgestaltet ist, daß es beim Empfang eines Anrufs von einem Anrufer durch Auswertung einer aus dem Kommunikationsnetz signalisierten Teilnehmernummer eine Länderkennummer ermittelt, aus der ersichtlich ist, aus welchem Land der Anruf stammt, daß die Vorrichtung (BV) mit einem Ausgabemittel (AAN) versehen ist, das so ausgestaltet ist, daß es beim Empfang eines Anrufes mit einer Länderkennummer, zu der eine Ansage abgespeichert ist, die Ausgabe der Ansage in der der Länderkennummer zugeordneten Sprache in das Kommunikationsnetz zur Übermittlung über das Kommunikationsnetz an den Anrufer veranlaßt, und daß das Ausgabemittel (AAN) weiter so ausgestaltet ist, daß es beim Empfang eines Anrufes mit einer Länderkennummer, zu der keine Ansage abgespeichert ist, die Ausgabe der Ansage in einer fest vorgegebenen Sprache in das Kommunikationsnetz zur Übermittlung über das Kommunikationsnetz an den Anrufer veranlaßt.

## Claims

1. Method for delivering an announcement in one of several languages for a device with a connection to a communications network, an announcement being stored in various languages (1) in the method, a country identification number being allocated to the announcement in each language stored (2), and the announcement being delivered in one of the various languages following receipt of a call (7, 8), **characterized in that** on receipt of a call from a caller, a country identification number is ascertained by evaluation of a subscriber number signalled from the communications network, from which identification number it is evident which country the call originates from (4), that on receipt of a call with a country identification number for which an announcement is stored, the announcement is delivered to the communications network in the language allocated to the country identification number and is conveyed to the caller via the communications network (7), and that on receipt of a call with a country identification number for which no announcement is stored, the announcement is delivered to the communications network in a set language and conveyed to the caller via the communications network (8).

2. Method according to claim 1, **characterized in that** the announcements in various languages are stored in compressed form.

3. Device (BV) for delivering an announcement in one of several languages, with a means of connection (AS) for a communications network, with a control means (HOST) for controlling the functions executable by the device (BV), with a storage device (MEM) for storing an announcement in various languages, with an allocating means (ZLNR) that is configured so that it allocates one or more country identification numbers to the announcement for each language stored, and with a receiving means (ELNR) for receiving from the communications network signalled subscriber numbers of calls which arrive at the device from the communications network, **characterized in that** the device (BV) is provided with an evaluating means (ALNR), which is configured so that on receipt of a call from a caller it ascertains a country identification number by evaluating a subscriber number signalled from the communications network, from which identification number it is evident which country the call originates from, that the device (BV) is provided with an output means (AAN), that is configured so that, on receipt of a call with a country identification number for which an announcement is stored, it causes the announcement to be delivered to the communications network in the language allocated to the country identification number for conveying via the communications network to the caller, and that the output means (AAN) is also configured so that on receipt of a call with a country identification number for which no announcement is stored, it causes the announcement to be delivered to the communications network in a set language for conveying via the communications network to the caller.

## Revendications

1. Procédé pour sortir une annonce dans une langue parmi plusieurs pour un dispositif avec un raccordement à un réseau de communication, dans lequel une annonce est mémorisée (1) dans différentes langues, un indicatif de pays est affecté (2) à chaque langue mémorisée, et l'annonce est sortie (7, 8) dans l'une des différentes langues après réception d'un appel, **caractérisé en ce qu'**à la réception d'un appel d'un demandeur, par évaluation d'un numéro d'abonné signalisé à partir du réseau de communication un indicatif de pays est déterminé, qui permet de savoir de quel pays provient l'appel (4), **en ce qu'**à la réception d'un appel avec un indicatif de pays, pour lequel une annonce est mémorisée, l'annonce est sortie dans la langue affectée à l'indicatif de pays est sortie à destination du réseau de communication et transmise à travers le réseau de communication jusqu'au demandeur (7), et **en ce qu'**à la réception d'un appel avec un indicatif de pays, pour lequel aucune annonce n'est mémorisée, l'annonce est sortie dans une langue prédéterminée à destination du réseau de communication et transmise à travers le réseau de communication jusqu'au demandeur (8).

2. Procédé selon la revendication 1, **caractérisé en ce que** les annonces dans différentes langues sont mémorisées sous forme comprimée.

3. Dispositif (BV) pour sortir une annonce dans une langue parmi plusieurs avec des moyens de raccordement (AS) pour un réseau de communication, avec des moyens de commande (HOST) pour commander des fonctions exécutables par le dispositif (BV), avec une mémoire (MEM) pour mémoriser une annonce dans différentes langues, avec des moyens d'affectation (ZLNR) qui sont réalisés de telle sorte qu'ils affectent un ou plusieurs indicatifs de pays à l'annonce pour chaque langue mémorisée, et avec des moyens de réception (ELNR) pour recevoir des numéros d'abonné de demandeurs signalisés par le réseau de réseau de communication, **caractérisé en ce que** le dispositif (BV) est muni de moyens d'évaluation (ALNR) qui sont réalisés de telle sorte qu'à la réception d'un appel d'un demandeur, par évaluation d'un numéro d'abonné signalisé à partir du réseau de communication, un indicatif de pays est déterminé qui permet de savoir de quel pays provient l'appel, **en ce que** le dispositif (BV) est muni de moyens de sortie (AAN) qui sont réalisés de telle sorte qu'à la réception d'un appel avec un indicatif de pays, pour lequel une annonce est mémorisée, ils déclenchent la sortie de l'annonce dans la langue affectée à l'indicatif de pays à destination du réseau de communication pour la transmission à travers le réseau de communication jusqu'au demandeur, et **en ce que** les moyens de sortie (AAN) sont en outre réalisés de telle sorte qu'à la réception d'un appel avec un indicatif de pays, pour lequel aucune annonce n'est mémorisée, ils déclenchent la sortie de l'annonce dans une langue prédéterminée à destination du réseau de communication pour la transmission à travers le réseau de communication jusqu'au demandeur.
